# EUROPÄISCHE PATENTSCHRIFT

(11) **EP 2 069 685 B1**
(45) Veröffentlichungstag und Bekanntmachung des Hinweises auf die Patenterteilung: **06.11.2013**
(21) Anmeldenummer: 07818263.1
(22) Anmeldetag: 20.09.2007
(51) Int. Cl.: F21V 14/08, B60Q 1/08

(54) **SCHEINWERFERANORDNUNG FÜR EIN FAHRZEUG UND VERFAHREN ZUM STEUERN EINER SCHEINWERFERANORDNUNG**
HEADLIGHT ARRANGEMENT FOR A VEHICLE AND METHOD FOR CONTROLLING A HEADLIGHT ARRANGEMENT
ENSEMBLE PHARE POUR UN VÉHICULE ET PROCÉDÉ DE COMMANDE ASSOCIÉ

(30) Priorität: 27.09.2006 DE 102006045981; 13.04.2007 DE 102007017921
(43) Veröffentlichungstag der Anmeldung: 17.06.2009
(60) Teilanmeldung: 09160226.8
(73) Patentinhaber: Volkswagen Aktiengesellschaft, 38440 Wolfsburg (DE); Hella KGaA Hueck & Co., 59552 Lippstadt (DE)
(72) Erfinder: SCHNEIDER, Arthur, 38162 Cremlingen (DE); HILGENSTOCK, Jörg, 38527 Meine (DE)
(74) Vertreter: Reitstötter - Kinzebach
(86) Internationale Anmeldenummer: PCT/EP2007/008171
(87) Internationale Veröffentlichungsnummer: WO 2008/037388

(56) Entgegenhaltungen:
- EP-A- 1 707 438
- DE-A1-102004 034 838
- FR-A- 1 306 770
- US-A- 3 249 761
- US-A- 5 660 454
- US-A1- 2004 052 083
- US-A1- 2004 114 379

## Beschreibung

Die vorliegende Erfindung betrifft ein Verfahren zum Steuern einer Scheinwerferanordnung für ein Fahrzeug mit zumindest zwei beabstandeten Scheinwerfern, die jeweils einen Lichtstrahl zum Erzeugen einer Gesamtlichtverteilung emittieren, und mit jeweils einer Blendenanordnung für jeden der zwei Scheinwerfer, deren Lage zum Verändern der Gesamtlichtverteilung veränderbar ist.

Aus der DE 43 18 681 C2 ist eine einstellbare Blendeneinrichtung für einen Scheinwerfer nach dem Projektionsprinzip für ein Kraftfahrzeug bekannt. Die in dieser Druckschrift beschriebene Blendeneinrichtung absorbiert einen Teil der Lichtstrahlen, die von einem Reflektor des Scheinwerfers reflektiert werden und sich in Richtung einer Projektionslinse ausbreiten, so dass sich eine Hell-Dunkel-Verteilung in der Gesamtlichtverteilung einstellt. Die Lage dieser Hell-Dunkel-Grenze ist einstellbar. Hierfür weist die Blendeneinrichtung zwei rohrförmige Blendenteile auf, die exzentrisch gelagert sind, so dass sich bei einer Drehung der Blendenteile die Hell-Dunkel-Grenzlinien vertikal bewegen. Die beiden Blendenteile besitzen einen unterschiedlichen Durchmesser und sind separat drehbar, so dass sich die Form der Hell-Dunkel-Grenze einstellen lässt.

Ferner ist aus der DE 197 56 574 A1 eine Beleuchtungseinheit für ein Fahrzeug bekannt, die eine Fahrumgebungs-Detektionsvorrichtung und eine Beleuchtungssteuerungsvorrichtung umfasst, mit welcher die Gesamtlichtverteilung der Scheinwerfer des Fahrzeugs gesteuert werden kann.

In der FR-A-1306770 wird ein gattungsgemäßes Verfahren zum Steuern einer Scheinwerferanordnung beschrieben, bei welchem andere Verkehrsteilnehmer erfasst werden und die Gesamtlichtverteilung verändert wird, um ein Blenden dieser Verkehrsteilnehmer zu vermeiden. Es wird dazu eine Vielzahl von nebeneinander angeordneten, in Lichtstrahlrichtung wegklappbaren, lichtundurchlässigen Blenden vorgesehen.

Die US 3 249 761 beschreibt ein Verfahren, bei dem entgegenkommende Fahrzeuge erfasst werden und die Gesamtlichtverteilung so verändert wird, dass sich in einem Mittelbereich eine geringere Leuchtweite als in den beiden Randbereichen ergibt. Dabei wird vorgeschlagen, die Lichtstrahlen entweder durch Überkreuzen nach innen zu schwenken oder alternativ die Gesamtlichtverteilung durch Verschieben einer Blende zu verändern.

Die US 2004/0114379 A1 offenbart ein Verfahren zum Steuern einer Scheinwerferanordnung, so dass sich in einem Mittelbereich eine geringere Leuchtweite ergibt, wobei eine digitale Strahlformungsoptik eine Vielzahl von gespeicherten Lichtmustern erzeugen kann.

In der DE 10 2004 034838 A1 ist eine Blendenanordnung mit einer stufenlos vertikal verstellbaren Blende zur Modifikation der Gesamtlichtverteilung beschrieben.

Schließlich beschreibt die US 5 660 454 A eine Blendenanordnung mit drei Blenden, von der eine vertikal und die beiden anderen horizontal veränderbar sind, um die Gesamtlichtverteilung insbesondere dem Straßenverlauf anpassen zu können.

Es ist die Aufgabe der vorliegenden Erfindung, ein Verfahren zum Steuern einer Scheinwerferanordnung für ein Fahrzeug bereitzustellen, mit welchem dem Fahrer des Fahrzeugs eine möglichst gute Sicht auf die vor ihm liegende Fahrbahn bereitgestellt werden kann und gleichzeitig die Blendung anderer Verkehrsteilnehmer wirkungsvoll verhindert wird.

Diese Aufgabe wird erfindungsgemäß durch ein Verfahren mit den Merkmalen des Anspruchs 1 gelöst. Vorteilhafte Aus- und Weiterbildungen ergeben sich aus den Unteransprüchen.

Bei dem erfindungsgemäßen Verfahren wird ein Verkehrsteilnehmer in Richtung der Lichtemission der Scheinwerferanordnung erfasst und, wenn ein solcher Verkehrsteilnehmer erfasst wurde, wird die Lage zumindest einer Blendenanordnung so verändert, dass bei der Gesamtlichtverteilung der Scheinwerferanordnung in Richtung des erfassten Verkehrsteilnehmers ein Mittelbereich mit geringerer Leuchtweite und beidseitig neben diesem Mittelbereich Seitenbereiche mit größerer Leuchtweite gebildet werden. Bei dem erfindungsgemäßen Verfahren ist wird des Weiteren, wenn ein solcher Verkehrsteilnehmer erfasst wurde, ferner die Emissionsrichtung des Lichtstrahls zumindest eines Scheinwerfers um eine vertikale Achse geschwenkt, um die Gesamtlichtverteilung der Scheinwerferanordnung zu erzeugen, bei der in Richtung des erfassten Verkehrsteilnehmers ein Mittelbereich mit geringerer Leuchtweite und beidseitig neben diesem Mittelbereich Seitenbereiche mit größerer Leuchtweite gebildet werden.

Bei dem erfindungsgemäßen Verfahren wird in der Gesamtlichtverteilung der Scheinwerferanordnung in Richtung eines Verkehrsteilnehmers ein Korridor mit geringerer Leuchtweite gebildet, wobei sich der andere Verkehrsteilnehmer in diesem Korridor befindet. Es wird somit verhindert, dass dieser Verkehrsteilnehmer von der Lichtemission der Scheinwerferanordnung geblendet wird. Gleichzeitig wird bei dem erfindungsgemäßen Verfahren jedoch beidseitig zu dem erfassten Verkehrsteilnehmer jeweils ein Bereich mit größerer Leuchtweite bereitgestellt, so dass in diesen Bereichen dem Fahrer des Fahrzeugs weiterhin eine Ausleuchtung mit großer Reichweite zur Verfügung gestellt wird. Diese große Leuchtweite kann beispielsweise der Femlichtfunktion eines herkömmlichen Scheinwerfers entsprechen.

Gemäß einer bevorzugten Ausgestaltung des erfindungsgemäßen Verfahrens wird die Gesamtlichtverteilung der Scheinwerferanordnung in Richtung des erfassten Verkehrsteilnehmers dadurch verändert, dass die Lage zumindest einer Blendenanordnung in vertikaler Richtung verändert wird und die Emissionsrichtung des Lichtstrahls zumindest eines Scheinwerfers um eine vertikale Achse geschwenkt wird. Die Emissionsrichtungen der Lichtstrahlen der Scheinwerfer werden insbesondere um eine vertikale Achse auseinandergeschwenkt, wenn ein Verkehrsteilnehmer in Richtung der Lichtemission der Scheinwerferanordnung erfasst wird. Falls die Scheinwerferanordnung eine Kurvenlichtfunktion umfasst, bei welcher die Emissionsrichtung um eine vertikale Achse schwenkbar ist, kann diese für das Kurvenlicht bereits zur Verfügung stehende Funktion ferner bei dem erfindungsgemäßen Verfahren verwendet werden, um ein Blenden anderer Verkehrsteilnehmer zu vermeiden. Das erfindungsgemäße Verfahren lässt sich somit bei einer Scheinwerferanordnung mit Kurvenlichtfunktion sehr kostengünstig realisieren.

Gemäß einer anderen Ausgestaltung des erfindungsgemäßen Verfahrens wird die Gesamtlichtverteilung der Scheinwerferanordnung in Richtung des erfassten Verkehrsteilnehmers dadurch verändert wird, dass die Lage zumindest einer Blendenanordnung in vertikaler und horizontaler Richtung verändert wird.

Bei dem erfindungsgemäßen Verfahren wird ferner der vertikale Winkel des Verkehrsteilnehmers in Richtung der Lichtemission der Scheinwerferanordnung erfasst. Unter dem vertikalen Winkel wird der zwischen einer Horizontalebene des lichtemittierenden Fahrzeugs und der Verbindungslinie des lichtemittierenden Fahrzeugs und dem anderen Verkehrsteilnehmer gebildete Winkel in Vertikalrichtung verstanden. In diesem Fall kann die Leuchtweite im Mittelbereich in Richtung des erfassten Verkehrsteilnehmers in Abhängigkeit von dem vertikalen Winkel des Verkehrsteilnehmers geregelt werden. Ist der andere Verkehrsteilnehmer ein vorausfahrendes Fahrzeug, kann somit bei dem erfindungsgemäßen Verfahren immer die maximale Leuchtweite bis zu diesem vorausfahrenden Fahrzeug bereitgestellt werden, ohne den Fahrer des vorausfahrenden Fahrzeugs zu blenden. Verringert sich der Abstand zu diesem vorausfahrenden Fahrzeug und damit der vertikale Winkel, wird auch die Leuchtweite im Mittelbereich verringert. Vergrößert sich der Abstand zum vorausfahrenden Fahrzeug, kann auch die Leuchtweite im Mittelbereich vergrößert werden.

Gemäß einer weiteren Ausgestaltung kann die Gesamtlichtverteilung relativ zum erfassten weiteren Verkehrsteilnehmer dem Fahrer schematisch auf einem Display im Fahrzeuginnenraum veranschaulicht werden.

Gemäß einer bevorzugten Ausgestaltung des erfindungsgemäßen Verfahrens umfasst jede der beiden Blendenanordnungen zumindest zwei vertikal und ggf. auch horizontal bewegbare Blenden, insbesondere flächige Blenden. Die Gesamtlichtverteilung der Scheinwerferanordnung beim Erfassen eines anderen Verkehrsteilnehmers kann dadurch verändert werden, dass die vertikale und ggf. auch die horizontale Lage zumindest einer der beiden Blenden einer Blendenanordnung verändert wird. Die Blenden weisen jeweils eine Abschattungskante auf, bei welcher der Lichtstrahl des jeweiligen Scheinwerfers abgeschattet wird. Die Abschattungskanten der ersten Blenden können z.B. wie bei einer bekannten Blende für ein Abblendlicht eine schräge Stufe aufweisen. Ferner können die Abschattungskanten der zweiten Blenden eine senkrechte Stufe aufweisen. Die Leuchtweite im Mittelbereich der Gesamtlichtverteilung der Scheinwerferanordnungen kann in diesem Fall alternativ oder zusätzlich durch die vertikale Lage der zweiten Blenden oder einer der zweiten Blenden gesteuert und/oder geregelt werden.

Der Einsatz flächiger Blenden hat gegenüber dem Einsatz sich drehender Zylinder bzw. sich drehender Walzen den Vorteil, dass die Abschattungskante bei einer entsprechenden Positionierung der Blenden im Scheinwerfer schärfer abgebildet werden kann als ein sich drehender Zylinder bzw. eine sich drehende Walze. Beim Drehen des Zylinders oder der Walze wird die vertikale Kante einer auf einen vertikalen Schirm projizierten Gesamtlichtverteilung aus der Schärfeebene herausgedreht und dadurch nur sehr unscharf abgebildet. Durch die Verwendung flächiger Blenden lässt sich somit eine bessere Ausleuchtung des Bereichs in unmittelbarer Nähe eines anderen Verkehrsteilnehmers erreichen.

Die von dem erfindungsgemäßen Verfahren erzeugte Gesamtlichtverteilung kann symmetrisch hinsichtlich der Mittelachse der Gesamtlichtverteilung sein. Gemäß einer anderen Ausgestaltung des Verfahrens wird eine asymmetrische Lichtverteilung mit geringerer Leuchtweite im Mittelbereich erzeugt. Dabei können insbesondere die Blenden und Schwenkwinkel für die beiden Scheinwerfer verschieden angesteuert werden. Beispielsweise kann von dem linken Scheinwerfer eine größere Leuchtweite bereitgestellt werden, als von dem rechten Scheinwerfer.

Gemäß einer weiteren Ausgestaltung des erfindungsgemäßen Verfahrens wird eine Messgröße für den gefahrenen Kurvenradius gewonnen. In diesem Fall kann die Leuchtweite insgesamt mit kleiner werdendem Kurvenradius abgesenkt werden. Die Messgröße für den Kurvenradius kann beispielsweise der Lenkwinkeleinschlag sein. Diese Größe lässt sich relativ einfach gewinnen. Der Kurvenradius kann jedoch auch genauer durch Parameter bestimmt werden, die üblicherweise in Verbindung mit Fahrzeugstabilitätssystemen gewonnen werden.

Des Weiteren kann die Leuchtweite auch in Abhängigkeit von Navigationsdaten gesteuert werden. Beispielsweise kann in geschlossenen Ortschaften eine geringere maximale Leuchtweite als außerhalb geschlossener Ortschaften angesteuert werden.

Ferner kann erfasst werden, ob eine Kuppe überfahren wird und, falls eine Kuppe überfahren wird, wird die Leuchtweite insgesamt auf einen Grenzwert abgesenkt. Gleichermaßen kann erfasst werden, ob eine Senke durchfahren wird und, falls eine Senke durchfahren wird, wird die Leuchtweite insgesamt auf einen Schwellwert angehoben.

Eine Scheinwerferanordnung, die zum Durchführen des erfindungsgemäßen Verfahrens geeignet ist, umfasst zwei beabstandete Projektionsscheinwerfer und eine Blendenanordnung für jeden der zwei Projektionsscheinwerfer, die jeweils zumindest zwei relativ zum Lichtstrahl bewegbare Blenden zum selektiven Verändern der Gesamtlichtverteilung umfassen. Bei den relativ zum Lichtstrahl bewegbaren Blenden handelt es sich insbesondere um flächige Blenden. Des Weiteren kann mit diesen Blenden insbesondere die Leuchtweite der Gesamtlichtverteilung selektiv verändert werden, d. h. die horizontale Hell-Dunkel-Grenze der Gesamtlichtverteilung. Des Weiteren lässt sich mit den Blenden bevorzugt auch eine vertikale Hell-Dunkel-Grenze verändern. Schließlich kann der Verlauf der Hell-Dunkel-Grenze bei der vertikalen bzw. horizontalen Grenze von den Blenden bestimmt sein.

Die Normalen der flächigen Blenden sind insbesondere im wesentlichen parallel zur Lichtemissionsrichtung ausgerichtet, wobei die Blenden senkrecht zu dieser Normalen bewegbar sind. Sie sind insbesondere in der Vertikalen im Lichtstrahl des jeweiligen Scheinwerfers bewegbar, wenn die Lichtemissionsrichtung der Scheinwerfer um eine vertikale Achse schwenkbar ist. Sie sind ferner bevorzugt in der Horizontalen bewegbar, wenn die Lichtemissionsrichtung der Scheinwerfer nicht um eine vertikale Achse schwenkbar ist.

Die Blenden weisen eine Abschattungskante auf, bei welcher der Lichtstrahl des jeweiligen Scheinwerfers abgeschattet wird. Die Abschattungskante der ersten Blenden weist z.B. wie eine Blende für ein Abblendlicht eine schräge Stufe auf, die Abschattungskante der zweiten Blenden weist z.B. eine senkrechte Stufe auf.

Der Projektionsscheinwerfer umfasst eine Lichtquelle und einen die Lichtquelle umgebenden Reflektor, so dass auf an sich bekannte Weise ein Lichtstrahl in Richtung einer Projektionslinse erzeugt wird. Die Blendenanordnung ist hinsichtlich des Abstands von der Lichtquelle in Lichtemissionsrichtung nahe oder bei einem Brennpunkt des Reflektors angeordnet. Ferner kann die Blendenanordnung zwischen der Lichtquelle und der Linse angeordnet sein, insbesondere ist sie am Brennpunkt der Projektionslinse angeordnet.

Die Verwendung flächiger Blenden hat gegenüber sich drehenden Zylindern oder Walzen, wie sie üblicherweise im Stand der Technik verwendet werden, den bereits vorstehend beschriebenen Vorteil, dass sich die Abschattungskante einer Blende schärfer abbilden lässt. Die von der erfindungsgemäßen Scheinwerferanordnung erzeugte Gesamtlichtverteilung hat somit eine schärfere Hell-Dunkel-Grenze.

Bei der Scheinwerferanordnung kann mindestens eine Blende vertikal verschiebbar und mindestens eine Blende horizontal verschiebbar sein. Bevorzugt weist jeder der zwei Projektionsscheinwerfer eine Blendenanordnung mit jeweils einer vertikal und horizontal verschiebbaren Blende auf. Mit dieser Scheinwerferanordnung lassen sich vielfältige Gesamtlichtverteilungen sehr einfach erzeugen. Die erzeugten Gesamtlichtverteilungen können insbesondere so ausgebildet sein, dass eine Blendung anderer Verkehrsteilnehmer verhindert wird. Ferner lässt sich eine solche Scheinwerferanordnung sehr kostengünstig herstellen. Schließlich benötigt diese Scheinwerferanordnung nur sehr wenig Bauraum.

Die Scheinwerferanordnung umfasst z.B. zum vertikalen und horizontalen Verschieben der beiden Blenden einen gemeinsam mit beiden Blenden gekoppelten Aktuator. Mit einem einzigen Aktuator lassen sich somit die beiden Blenden der Blendenanordnung eines Projektsscheinwerfers verschieben und die gewünschte Lichtverteilung dieses Projektsscheinwerfers erzeugen.

Bevorzugt ist die Verschiebbarkeit der vertikal bzw. horizontal verschiebbaren Blende von einem ersten bzw. zweiten Anschlag begrenzt. Ferner sind jeweils Mittel zum Ausüben einer Kraft in Richtung des ersten bzw. zweiten Anschlags mit der vertikal bzw. horizontal verschiebbaren Blende gekoppelt.

Bei der Scheinwerferanordnung wechselwirkt der Aktuator z.B. mit jeweils einer Kante der Blenden. Dabei ist die Normale der Kante der jeweiligen Blende, d.h. die Normale auf der Seitenfläche, welche die Dicke der Blende bestimmt, in Richtung der Kraftausübung auf die Blende gerichtet. Die auf die Blende ausgeübte Kraft drückt somit die Blende gegen den Aktuator. Falls sich der Aktuator jedoch über den Anschlag für die jeweilige Blende hinaus bewegt, drückt die auf die jeweilige Blende ausgeübte Kraft dieselbe gegen den jeweiligen Anschlag.

Bei der Scheinwerferanordnung ist der Aktuator z.B. so mit den Blenden gekoppelt, dass eine Drehbewegung des Aktuators in eine vertikale Verschiebung der vertikal verschiebbaren Blende und einer horizontale Verschiebung der horizontal verschiebbaren Blende umgesetzt wird.

Die Scheinwerferanordnung ist insbesondere in zumindest einer Stellung der Blenden die Lichtverteilung des zugeordneten Projektionsscheinwerfers in einen äußeren Bereich größer als in einem inneren Bereich, wobei beim Übergang vom äußeren zum inneren Bereich eine vertikale Kante in der Hell-Dunkel-Grenze gebildet ist. Dabei bezieht sich der äußere bzw. innere Bereich auf die Längsmittelachse des Fahrzeugs.

Die Leuchtweite der Gesamtlichtverteilung ist durch die Blendenanordnung und durch die um eine vertikale Achse schwenkbaren Emissionsrichtungen der Lichtstrahlen so veränderbar, dass ein Mittelbereich mit geringerer Leuchtweite in einer bevorzugten Richtung und beidseitig neben diesem Mittelbereich Seitenbereiche mit größerer Leuchtweite erzeugbar sind. Vorzugsweise wird der Mittelbereich mit geringerer Leuchtweite durch eine vertikale Lageveränderung der Blendenanordnung oder einzelner Blenden dieser Blendenanordnung und durch ein Schwenken der Emissionsrichtung zumindest des Lichtstrahls eines Scheinwerfers erzeugt oder durch eine vertikale und horizontale Lageveränderung der Blendenanordnung oder einzelner Blenden dieser Blendenanordnung erzeugt.

Beispielsweise können die Blendenanordnungen der beiden Scheinwerfer bei ersten Winkelstellungen der Richtungen der Lichtstrahlen der Scheinwerfer die Gesamtlichtverteilung im Wesentlichen unverändert lassen, hingegen bei zweiten Winkelstellungen der Richtungen der Lichtstrahlen der Scheinwerfer in der Gesamtlichtverteilung den mittleren Bereich mit geringerer Leuchtweite bilden. Bei diesen zweiten Winkelstellungen der Emissionsrichtungen der Scheinwerfer sind die Lichtstrahlen der Scheinwerfer insbesondere nach außen auseinandergeschwenkt.

Die Scheinwerferanordnung ist mit einer Einrichtung zum Erfassen eines Verkehrsteilnehmers in Richtung der Lichtemission der Scheinwerfer gekoppelt. Diese Erfassungseinrichtung kann z.B. ein Laser-, ein Infrarot- oder ein Radarsensor sein. Ferner kann die Erfassungseinrichtung eine Kamera, insbesondere eine CCD-Kamera sein, die mit einer Bildverarbeitungssoftware gekoppelt ist, durch welche ein anderer Verkehrsteilnehmer erfassbar ist. Mit der Erfassungseinrichtung ist insbesondere sowohl in horizontale als auch die vertikale Richtung des Verkehrsteilnehmers erfassbar.

Bei dem Verkehrsteilnehmer kann es sich insbesondere um ein vorausfahrendes oder ein entgegenkommendes Fahrzeug handeln.

Die Erfindung wird nun anhand von Ausführungsbeispielen mit Bezug zu den Zeichnungen erläutert.
- Fig. 1: zeigt schematisch ein Ausführungsbeispiel eines Scheinwerfers, der durch das erfindungsgemäße Verfahren gesteuert wird,
- Fig. 2A und 2B: zeigen Beispiele für zwei Blenden einer Blendenanordnung,
- Fig. 3A bis 5B: zeigen Positionen der beiden in den Fig. 2A und 2B gezeigten Blenden mit der dazugehörigen Lichtverteilung,
- Fig. 6A und 6B: zeigen Isolux-Diagramme der Gesamthelligkeitsverteilung auf einer senkrechten Wand ohne ein vorausfahrendes Fahrzeug und beim Erfassen eines vorausfahrenden Fahrzeugs,
- Fig. 7: zeigt schematisch eine Scheinwerferanordnung, die durch das erfindungsgemäße Verfahren steuerbar ist,
- Fig. 8: zeigt die Lichtverteilung bei einem entgegenkommenden Fahrzeug, wie sie sich bei der Ausführung eines Beispiels des erfindungsgemäßen Verfahrens ergibt,
- Fig. 9: zeigt die Gesamtlichtverteilung bei einem entgegenkommenden Fahrzeug, wie sie sich bei einem Beispiel eines nicht zur Erfindung gehörenden Verfahrens ergibt,
- Fig. 10: zeigt die Gesamtlichtverteilung, wie sie sich gemäß einem Beispiel des erfindungsgemäßen Verfahrens ergibt,
- Fig. 11 und 12: zeigen die Gesamtlichtverteilung, wie sie sich bei einem Überholvorgang bei der Durchführung eines nicht zur Erfindung gehörenden Verfahrens ergibt und
- Fig. 13 und 14: zeigen ein weiteres Beispiel für zwei Blenden einer Blendenanordnung,
- Fig. 15: zeigt einen Aktuator für eine Scheinwerferanordnung und
- die Fig. 16a bis 18b: zeigen Positionen der beiden in den Fig. 13 und 14 gezeigten Blenden in der Blendenanordnung mit der dazugehörigen Lichtverteilung eines Scheinwerfers.

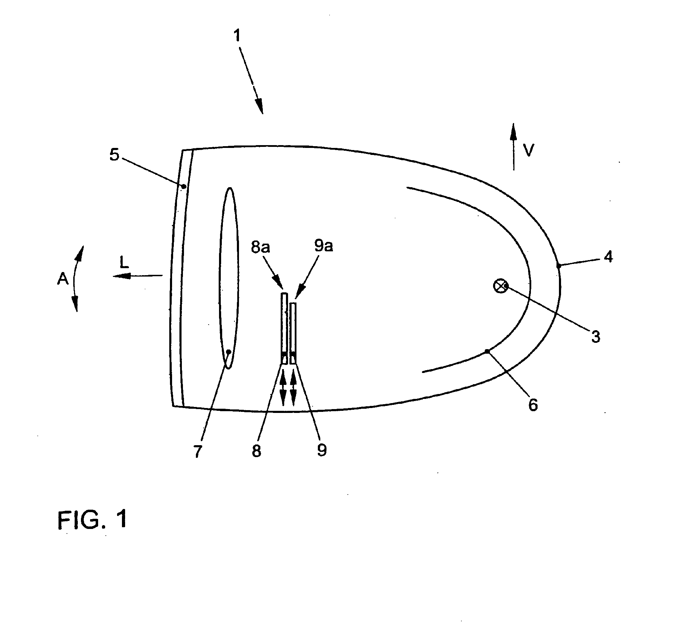

Die Scheinwerferanordnung umfasst zwei beabstandete Projektionsscheinwerfer 1, die vorne auf der rechten und linken Seite des Fahrzeugs auf an sich bekannte Weise angeordnet sind. Einer dieser Projektionsscheinwerfer ist in Fig. 1 gezeigt. Der auf der anderen Seite angeordnete Projektionsscheinwerfer ist im wesentlichen identisch aufgebaut.

In Fig. 1 ist ein Schnitt in einer Ebene dargestellt, die parallel zu der von der Fahrzeuglängsachse und der Vertikalen V aufgespannten Ebene ist. Der Projektionsscheinwerfer 1 umfasst auf an sich bekannte Art und Weise eine Lichtquelle 3, die von einem als Rotationsellipsoid ausgebildeten Reflektor 6 umgeben ist. Der Reflektor 6 weist somit zwei Brennpunkte auf. Die Lichtquelle 3 befindet sich in einem der Brennpunkte des Reflektors 6. Das von der Lichtquelle 3 emittierte Licht wird von dem Reflektor 6 in Lichtemissionsrichtung L des Projektionsscheinwerfers 1 in Richtung einer Projektionslinse 7 reflektiert. Eine Blendenanordnung mit den flächigen Blenden 8 und 9 ist an der Brennposition der Projektionslinse 7 und nahe dem zweiten Brennpunkt des Reflektors 6 angeordnet. Die Normalen der flächigen Blenden 8 und 9 sind im wesentlichen parallel zur Lichtemissionsrichtung ausgerichtet. Die Lichtquelle 3, der Reflektor 6, die Linse 7 und die Blenden 8, 9 sind innerhalb eines Gehäuses 4 angeordnet, das von einer Lichtscheibe 5 abgeschlossen ist.

Der Projektionsscheinwerfer 1 lässt sich auf an sich bekannte Weise zur Einstellung der Leuchtweite in Richtung des Pfeils A auf und ab kippen. Die Lichtemission L des Projektionsscheinwerfers 1 ist außerdem um eine vertikale Achse schwenkbar. Der Projektionsscheinwerfer 1 ist beispielsweise zur Bereitstellung eines Kurvenlichts ausgebildet. Ferner lässt sich die Leuchtweite und insbesondere die Form der Hell-Dunkel-Grenze der Gesamtlichtverteilung des Projektionsscheinwerfers 1 dadurch verändern, dass die Blenden 8 und 9 in vertikaler Richtung bewegt werden. Zur Lageveränderung der Blenden 8 und 9 ist eine Steuervorrichtung vorgesehen.

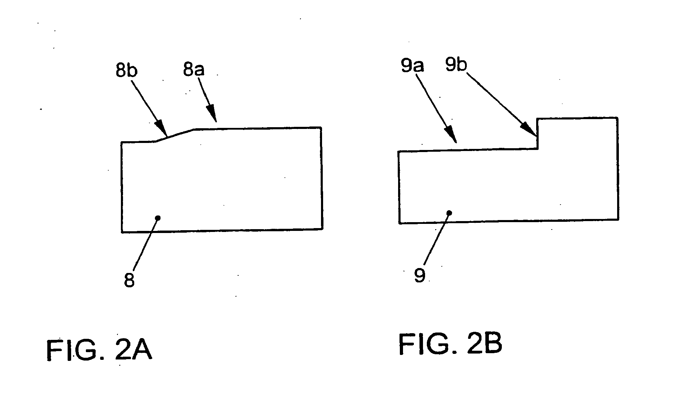

Die Wirkung der Blenden 8 und 9 auf die Gesamtlichtverteilung des Projektionsscheinwerfers wird im Folgenden mit Bezug zu den Fig. 2 bis 5 erläutert:

In Fig. 2A ist die erste Blende 8 der Blendenanordnung gezeigt. Die Blende 8 ist ein flächiges Gebilde, d.h. die Erstreckung der Blende 8 in einer Aufsicht, wie sie in Fig. 2A gezeigt ist, ist sehr viel größer als die Dicke der Blende 8. Die Blende 8 weist eine Abschattungskante 8a auf, welche eine Grenzlinie definiert, bei der das von der Lichtquelle 3 emittierte Licht abgeschattet wird (Fig. 1). Die erste Blende 8 entspricht im wesentlichen einer herkömmlichen Blende für ein Abblendlicht. In Fig. 2A ist die Blende 8 für den rechten Scheinwerfer 1 dargestellt. Die entsprechende Blende für den linken Scheinwerfer 2 ist identisch angeordnet. Die Abschattungskante 8a weist zwei vertikale Niveaus auf, die über eine schräge Stufe 8b miteinander verbunden sind. Das höhere Niveau der Abschattungskante 8a ist bei den Blenden 8 für den rechten und linken Scheinwerfer auf der rechten Seite der schrägen Stufe 8b.

In Fig. 2B ist die zweite Blende 9 der Blendenanordnung für den rechten Scheinwerfer 1 gezeigt. Wie die erste Blende 8 ist auch die zweite Blende 9 ein flächiges Gebilde. Es unterscheidet sich von der ersten Blende 8 hinsichtlich des Verlaufs der Abschattungskante 9a. Auch sie weist zwei horizontale Bereiche auf, die in verschiedenen vertikalen Niveaus angeordnet sind und die über eine Stufe miteinander verbunden sind. Im Unterschied zur Blende 8 umfasst die Blende 9 eine senkrechte Stufe 9b. Ferner ist die Stufe 9b größer als die Stufe 8a. Das bedeutet, dass die beiden horizontalen Niveaus, welche über die Stufe 9b verbunden werden, einen größeren Abstand aufweisen, als die entsprechenden Niveaus bei der ersten Blende 8. Des Weiteren ist die Stufe 9b bei einer anderen Breitenposition als die Stufe 8b angeordnet, nämlich weiter außen, d.h. weiter rechts bei der Darstellung der Fig. 2B für den rechten Scheinwerfer. Die Gesamtbreite der ersten Blende 8 entspricht jedoch derjenigen der zweiten Blende 9. Sie erstreckt sich über die gesamte Breite des Lichtstrahls, der von der Lichtquelle 3 und dem Reflektor 6 in Richtung der Projektionslinse 7 emittiert wird.

Das höhere Niveau der Abschattungskante 9a ist bei der zweiten Blende 9 für den rechten Scheinwerfer auf der rechten Seite der senkrechten Stufe 9b, bei dem linken Scheinwerfer auf der linken Seite der senkrechten Stufe 9b. Die zweiten Blenden 9 für den rechten und linken Scheinwerfer sind somit hinsichtlich einer vertikalen Ebene spiegelsymmetrisch angeordnet.

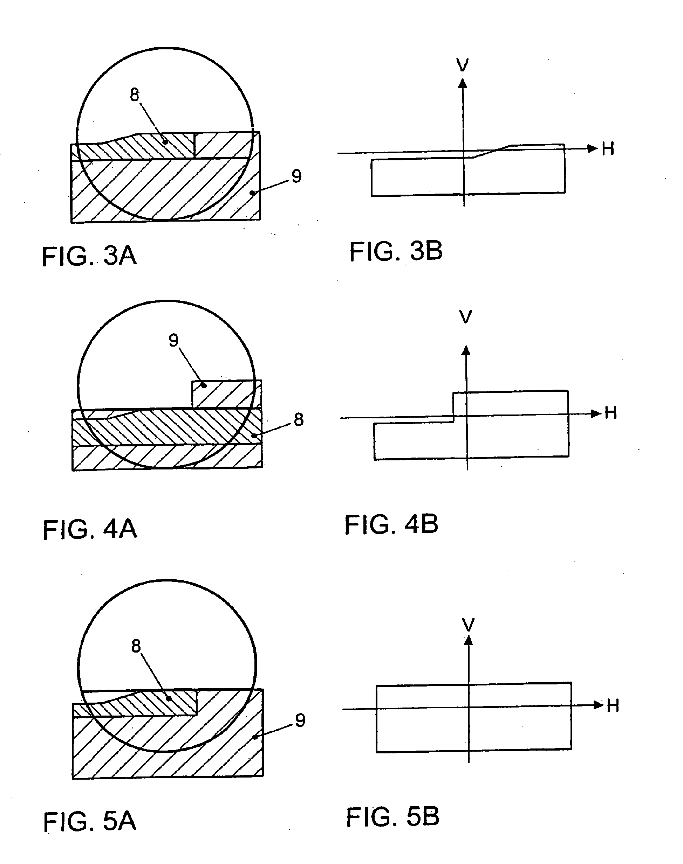

In den Fig. 3A bis 5A sind verschiedene vertikale Stellungen der Blenden 8 und 9 gezeigt. In den zugehörigen Fig. 3B bis 5B sind die entsprechenden Lichtverteilungen gezeigt, wie sie sich bei der entsprechenden Anordnung der Blenden 8 und 9 ergeben. Die Lichtverteilungen sind so gezeigt, wie sie bei der Beleuchtung auf einer 10 m entfernten senkrechten Wand erscheinen würden. Dabei ist zu berücksichtigen, dass hinter den Blenden 8 und 9 die Projektionslinse 7 angeordnet ist, die zu einer vertikalen und horizontalen Spiegelung der Lichtverteilung führt.

Bei der in Fig. 3A gezeigten Stellung der Blenden 8 und 9 sind beide Blenden 8 und 9 bis zu einem oberen Anschlag in den von der Lichtquelle 3 und dem Reflektor 6 emittierten Lichtstrahl versetzt. Die zugehörige Lichtverteilung, wie sie auf einer 10 m entfernten Wand erscheinen würde, ist in Fig. 3B gezeigt. Da die zweiten Blenden 9 bei dieser Stellung der Blenden 8, 9 keine Wirkung haben, ist die Lichtverteilung des rechten und linken Scheinwerfers 1, 2 in diesem Fall identisch. Diese Lichtverteilung entspricht der Lichtverteilung eines Abblendlichtes eines herkömmlichen Scheinwerfers.

Bei der in Fig. 4A gezeigten Stellung der Blenden 8 und 9 ist die erste Blende 8 im Vergleich zu der in Fig. 3A gezeigten Stellung bis zu einem unteren Anschlag abgesenkt. Die zugehörige Lichtverteilung des rechten Scheinwerfers 1 ist in Fig. 4B gezeigt. Im rechten Außenbereich ergibt sich eine Lichtverteilung, wie bei einem herkömmlichen Fernlicht. Im linken inneren Bereich ergibt sich eine Lichtverteilung wie bei einem herkömmlichen Abblendlicht. Im Außenbereich ist somit die Leuchtweite sehr groß, im Innenbereich wie bei einem Abblendlicht begrenzt. Die beiden Bereiche sind durch eine vertikale Stufe miteinander verbunden, die sich aus der vertikalen Stufe 9b der zweiten Blende 9 ergibt.

In Fig. 5A ist eine weitere Stellung der Blenden 8 und 9 gezeigt. In diesem Fall ist im Vergleich zu der Stellung, die in Fig. 4A gezeigt ist, auch die zweite Blende 9 bis zu einem unteren Anschlag abgesenkt. Es ergibt sich die in Fig. 5B gezeigte Lichtverteilung. Sie entspricht der Lichtverteilung eines herkömmlichen Fernlichts, bei welcher über die volle Breite eine sehr große Leuchtweite bereitgestellt wird.

Zwischen den in den Fig. 3A, 4A und 5A gezeigten Stellungen der Blenden 8 und 9 sind beliebige Zwischenstufen einstellbar, so dass sich die vertikale Stufe zwischen dem linken Innenbereich und dem rechten Außenbereich der Lichtverteilung beliebig verändern lässt.

Die Steuereinrichtung für die beiden Blenden 8 und 9 kann die Blenden 8, 9 beispielsweise mit einem Aktuator antreiben, welcher eine Schrittmotor umfasst, der die erste Blende 8 herauf- und herunterfahren kann. Über einen Stift wird die zweite Blende 9 von der ersten Blende 8 mit heruntergezogen, wenn die in Fig. 4A dargestellte Stellung der Blenden nach unten zu der in Fig. 5A gezeigten Stellung durchlaufen wird. Wird die in Fig. 4A dargestellte Stellung nach oben durchlaufen, d.h. wenn die erste Blende 8 nach oben geschoben wird, um die in Fig. 3A gezeigte Stellung zu erreichen, bleibt die zweite Blende 9 an ihrem oberen Anschlag stehen und die erste Blende 8 fährt alleine weiter hoch bis zu der in Fig. 3A gezeigten Stellung.

Der linke Projektionsscheinwerfer 2 ist identisch zu dem in Fig. 1 gezeigten rechten Projektionsscheinwerfer 1 bis auf dass die zweiten Blenden 9 spiegelverkehrt angeordnet sind, so dass die Stufen 9b der Abschattungskanten 9a jeweils nach außen, d.h. beim linken Scheinwerfer nach links, zu einem höheren Niveau springen.

Die Gesamtlichtverteilung, welche sich bei den jeweiligen Stellungen der Blenden 8 und 9 für den rechten und linken Scheinwerfer 1 und 2 ergibt, hängt nicht nur von der Stellung der Blenden 8 und 9 ab, sondern auch von dem Schwenkwinkel der Emissionsrichtung der Lichtstrahlen L der beiden Scheinwerfer 1 und 2 hinsichtlich Schwenkbewegungen um eine vertikale Achse. Sind die Emissionsrichtungen L der beiden Scheinwerfer 1 und 2 parallel zueinander, haben die Blenden 8 und 9 zumindest bei der in Fig. 4A gezeigten Stellung im Wesentlichen keine Auswirkungen auf die Gesamtlichtverteilung, da der im Innenbereich abgeschattete Teil der Lichtemission eines Scheinwerfers von dem anderen Scheinwerfer ausgeleuchtet wird. Werden die Emissionsrichtungen L der Lichtstrahlen der Scheinwerfer 1 und 2 jedoch auseinandergeschwenkt, d.h. jeweils um einen definierten Winkel nach außen geschwenkt, ergibt sich eine Gesamtlichtverteilung mit einem Mittelbereich mit geringerer Leuchtweite und beidseitig neben diesem Mittelbereich Seitenbereiche mit größerer Leuchtweite. Es wird somit ein Korridor mit geringerer Leuchtweite in der Mitte der Gesamtlichtverteilung gebildet.

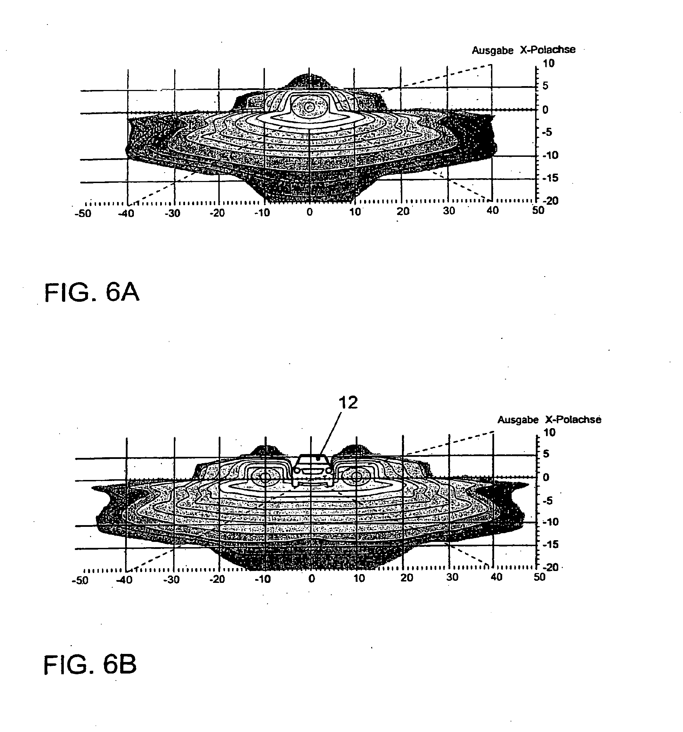

In der Fig. 6A ist ein Isolux-Diagramm mit einer Helligkeitsverteilung auf einer senkrechten Wand gezeigt, bei welchem die jeweiligen Blenden 8 und 9 der Blendenanordnungen für den rechten und linken Scheinwerfer 1 und 2 in der in Fig. 5A gezeigten Stellung sind, d.h. sie befinden sich jeweils am unteren Anschlag. Es wird eine Lichtverteilung für ein herkömmliches Fernlicht bereitgestellt.

In Fig. 6B ist ein Isolux-Diagramm mit einer Helligkeitsverteilung auf einer senkrechten Wand gezeigt, wie sie gemäß der Erfindung angesteuert wird, wenn z.B. ein vorausfahrendes Fahrzeug 12 detektiert wird. In diesem Fall befinden sich die Blenden 8 und 9 der Blendenanordnungen für den rechten und den linken Scheinwerfer 1 und 2 in der in Fig. 4A gezeigten Stellung, so dass sich ein Mittelbereich mit geringerer Leuchtweite gebildet werden kann. Ferner sind die Lichtemissionsrichtungen L der beiden Scheinwerfer 1 und 2 soweit auseinandergeschwenkt, dass die Breite des Mittelbereichs der Breite des Fahrzeugs 12 entspricht. Es wird somit in der Mitte der Gesamtlichtverteilung ein Bereich für einen anderen Verkehrsteilnehmer ausgespart, so dass dieser nicht geblendet wird.

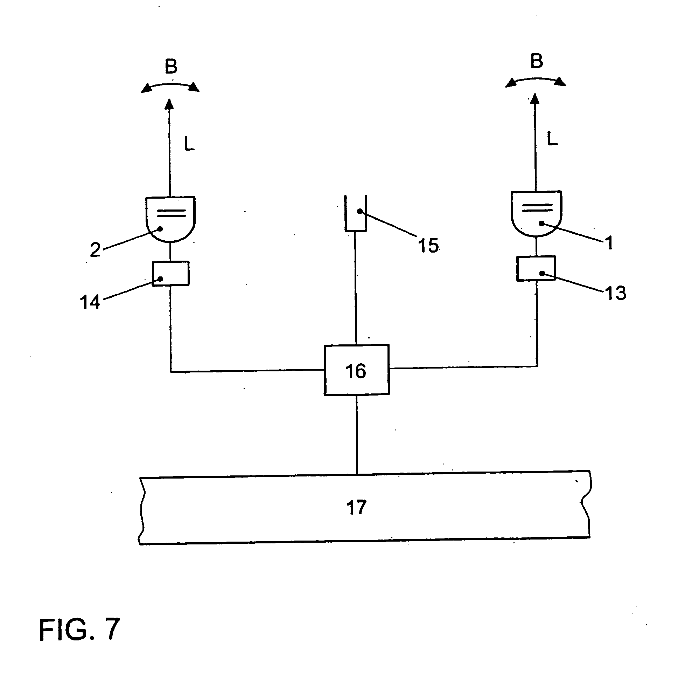

Im Folgenden wird mit Bezug zu Fig. 7 erläutert, wie der rechte und der linke Scheinwerfer 1 und 2 angesteuert wird:

Der rechte Scheinwerfer 1 ist mit einem Steuergerät 13, der linke Scheinwerfer 2 mit einem Steuergerät 14 verbunden. Diese Steuergeräte 13, 14 steuern zum einen den Schwenkwinkel, insbesondere den Schwenkwinkel um eine vertikale Achse, der von den Scheinwerfern 1 und 2 emittierten Lichtstrahlen L. Ferner steuern die Steuergeräte 13 und 14 die vertikale Lage der Blenden 8 und 9 der Blendenanordnungen für den rechten und linken Scheinwerfer 1, 2.

Des Weiteren ist eine Einrichtung 15 zum Erfassen eines Verkehrsteilnehmers in Richtung der Lichtemission L der Scheinwerfer 1, 2 vorgesehen. Bei dieser Erfassungseinrichtung 15 kann es sich um eine Kamera mit angeschlossener Bildverarbeitungseinheit handeln, die die Lichter vorausfahrender und entgegenkommender Fahrzeuge 11, 12 erfasst. Mittels der Bildverarbeitungseinrichtung kann die Richtung dieser Lichter sowohl in einer horizontalen als auch in einer vertikalen Richtung erfasst werden. Die Bildverarbeitungseinheit analysiert die von der nach vorne gerichteten Kamera aufgenommene Szene. In dieser Szene wird die Lage der Lichter von vorausfahrenden und entgegenkommenden Fahrzeugen detektiert. Anhand des horizontalen Abstands zweier Scheinwerfer bzw. Rücklichter eines anderen Fahrzeugs 11, 12 kann die Bildverarbeitung zusätzlich auf die Breite des Fahrzeugs Fahrzeug schließen. Schließlich können Lichtquellen erkannt werden, welche auf eine Straßenbeleuchtung bzw. eine Ortschaft schließen lassen. Eine Straßenbeleuchtung lässt sich in der Regel von Fahrzeuglichtern über die Position im Kamerabild oder über die mit dem Netz frequenzmodulierte Intensität unterscheiden. Der Öffnungswinkel der Kamera entspricht vorzugsweise dem Öffnungswinkel der Scheinwerferanordnung.

Die Richtung in der horizontalen und vertikalen Ebene wird von der Erfassungseinrichtung 15 an ein Steuergerät 16 übertragen, welches des Weiteren mit den Steuergeräten 13 und 14 verbunden ist.

Gemäß einer anderen Ausgestaltung des Systems ist die Erfassungseinrichtung 15 als Laser- oder Radarsensor ausgebildet, mit welchem die Entfernung von Objekten in Richtung der Lichtemissionsrichtung L gemessen werden kann. Hierbei können insbesondere auch unbeleuchtete oder unzureichend beleuchtete Verkehrsteilnehmer, wie beispielsweise Fußgänger und ggf. auch Radfahrer erfasst werden. Außerdem können über die Entfernungsmessung gezielt Verkehrsteilnehmer erfasst werden, die sich innerhalb der Blendungsgrenzen des Fernlichts befinden. Schließlich kann über die Messung von Entfernung, Geschwindigkeit und Bewegungsrichtung der Verkehrsteilnehmer eine gute Klassifikation von Fahrzeugen bzw. Verkehrsteilnehmern erfolgen, wodurch Fehlsteuerungen der Scheinwerferanordnung vermieden werden. Aus dem Abstand des Objekts lässt sich der vertikale Winkel berechnen, der als Steuergröße für die Scheinwerferanordnung verwendet wird.

Mit der Entfernungsmessung durch den Laser- oder Radarsensor ist es außerdem möglich, ein fahrendes Fahrzeug mittels der Geschwindigkeitserfassung von stehenden Objekten zu unterscheiden. Darüber hinaus kann mit einem scannenden Laserentfernungsmesser die Breite der erfassten Objekte vermessen werden, so dass mit höherer Sicherheit die Art von Objekten, d.h. ob es sich um einen Verkehrsteilnehmer, ein Kraftfahrzeug oder Radfahrer oder um einen Leitposten handelt, rückgeschlossen werden.

Der Laser- oder Radarsensor kann auch mit einer Kamera kombiniert werden, um die Erkennungssicherheit insbesondere hinsichtlich der Erfassung der Vertikalposition des Verkehrsteilnehmers zu erhöhen. Da Kameras, Laser- oder Radarsensoren in zunehmendem Maße Verwendung in Fahrzeugen mit Fahrassistenzsystemen finden, kann diese Sensorik für die Steuerung der Scheinwerferanordnung mitverwendet werden, ohne dass zusätzliche Kosten entstehen.

Das Steuergerät 16 ist ferner mit einem Fahrzeugbus 17 verbunden, über welchen weitere im Fahrzeug erfasste Daten an das Steuergerät 16 übertragen werden können. Beispielsweise kann auf diese Weise der Lenkwinkeleinschlag oder Daten, aus denen sich der gerade gefahrene Kurvenradius bestimmen lässt, an das Steuergerät 16 übertragen werden.

Im Folgenden wird erläutert, wie die Scheinwerfer 1 und 2 in Abhängigkeit von den Daten der Erfassungseinheit 15 und/oder weiteren im Fahrzeug erfassten Daten angesteuert wird:

Werden in der Mitte vor dem eigenen Fahrzeug 10 andere Verkehrsteilnehmer, wie z.B. ein vorausfahrendes Fahrzeug 12, detektiert, werden die beiden Blenden 8 und 9 sowohl der Blendenanordnung des rechten Scheinwerfers als auch der Blendenanordnung des linken Scheinwerfers 2 in die in Fig. 4A gezeigte Stellung gefahren. Ferner werden die Lichtemissionsrichtungen L der beiden Scheinwerfer 1 und 2 auseinandergeschwenkt, so dass in der Gesamtlichtverteilung ein Mittelbereich mit geringerer Leuchtweite entsteht, in welchem sich der andere Verkehrsteilnehmer befindet, ohne geblendet zu werden. Die Leuchtweite in diesem Bereich wird angepasst, indem die Blenden 8 und 9 in Zwischenstellungen zwischen den in Fig. 4A und 5A gezeigten Stellungen gebracht werden. Außerdem können die Blenden 8 und 9 für den rechten Scheinwerfer 1 anders angesteuert werden, als die Blende 8 und 9 des linken Scheinwerfers 2. Befinden sich z.B. rechts vor dem Fahrzeug 10 andere Verkehrsteilnehmer, die nicht geblendet werden sollen, kann im rechten Scheinwerfer 1 die Hell-Dunkel-Grenze auf die Entfernung dieser Verkehrsteilnehmer angepasst werden, indem die Blenden 8 und 9 in eine Stellung zwischen den in Fig. 3A und Fig. 4A gezeigten Stellungen gebracht wird. Die Blenden 8 und 9 des linken Scheinwerfers 2 können in der in Fig. 4A gezeigten Stellung verbleiben, d.h. im linken Bereich eine Fernlichtausleuchtung bereitstellen. Die Lage der vertikalen Kante in der Gesamtlichtverteilung, .d.h. die Lage bei der die Fernlichtausleuchtung des linken Scheinwerfers 1 beginnt, kann wiederum über den Schwenkwinkel hinsichtlich einer vertikalen Achse des linken Scheinwerfers 2 angepasst werden, und insbesondere so nah wie möglich an den anderen Verkehrsteilnehmer herangeführt werden. Bei Verkehrsteilnehmern auf der linken Seite vom Fahrzeug 10 wird entsprechend andersherum verfahren, d.h. die Blenden 8 und 9 und der Schwenkwinkel des jeweils anderen Scheinwerfers entsprechend angesteuert.

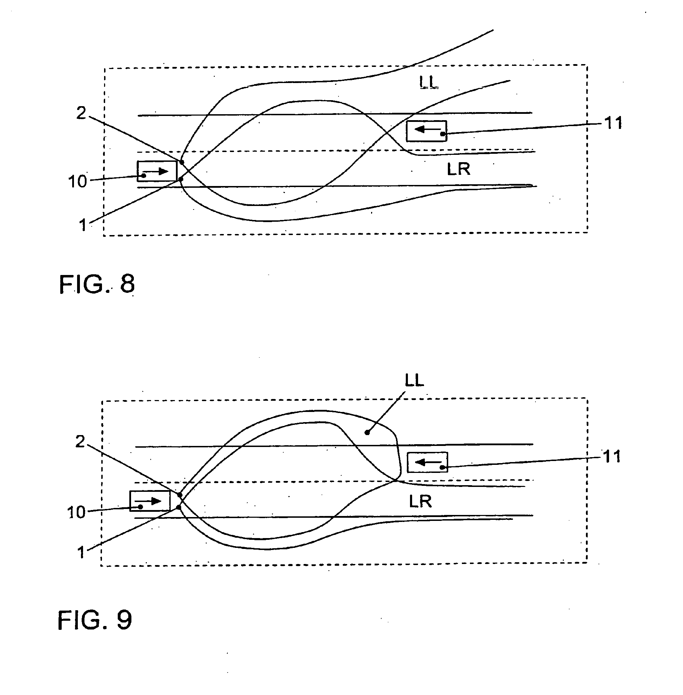

Fig. 8 zeigt ein Szenario, bei dem von der Erfassungseinrichtung 15 ein entgegenkommendes Fahrzeug 11 detektiert wurde. Dem Steuergerät 16 wird dabei kontinuierlich der horizontale und vertikale Winkel des entgegenkommenden Fahrzeugs 11 zum eigenen Fahrzeug 10 übertragen. Durch ein Schwenken der Lichtemissionsrichtungen L der Scheinwerfer 1 und 2 um eine vertikale Achse sowie durch eine Veränderung der Vertikalposition der Blenden 8 und 9 der Blendenanordnungen für die beiden Scheinwerfer 1 und 2 wird für den rechten Scheinwerfer 1 die Lichtverteilung LR und für den linken Scheinwerfer 2 die Lichtverteilung LL, wie sie in Fig. 8 dargestellt ist, erzeugt. In der Lichtverteilung ist, wie auch in den folgenden Figuren, die Hell-Dunkel-Grenze dargestellt. Es ist erkennbar, dass bei der Position des entgegenkommenden Fahrzeugs 11 ein Mittelbereich gebildet ist, bei dem die Leuchtweite geringer ist. Sie reicht so weit an das entgegenkommende Fahrzeug 11 heran, wie es möglich ist, ohne den Fahrer dieses Fahrzeugs 11 zu blenden. Beidseitig zu diesem Mittelbereich sind Seitenbereiche mit größerer Leuchtweite gebildet, um zum einen die Fahrbahn des Fahrzeugs 10 möglichst gut auszuleuchten und zum anderen den Bereich der Gegenfahrbahn zwischen dem Fahrzeug 10 und dem Fahrzeug 11 möglichst gut auszuleuchten. Letztere Ausleuchtung, die insbesondere von dem linken Scheinwerfer 2 zur Verfügung gestellt wird, verbessert auch die Sicht des Fahrers des entgegenkommenden Fahrzeugs 11. Dabei wird die Lage der Hell-Dunkel-Grenze im Mittelbereich der Gesamtlichtverteilung ständig an die Position des entgegenkommenden Fahrzeugs 11 angepasst, d.h. die Hell-Dunkel-Grenze verschiebt sich zunehmend in Richtung des Fahrzeugs 10.

In Fig. 9 ist eine Lichtverteilung gezeigt, die alternativ zu der in Fig. 8 gezeigten Lichtverteilung bei einem entgegenkommenden Fahrzeug 11 gewählt werden kann, und die sich bei der Ausführung eines nicht zur Erfindung gehörenden Verfahrens ergibt. Diese Lichtverteilung kann insbesondere dann gewählt werden, wenn sich das entgegenkommende Fahrzeug 11 sehr nahe bei dem Fahrzeug 10 befindet. Im Unterschied zu der in Fig. 8 dargestellten Lichtverteilung ist in diesem Fall die Leuchtweite des linken Scheinwerfers 2 insgesamt begrenzt.

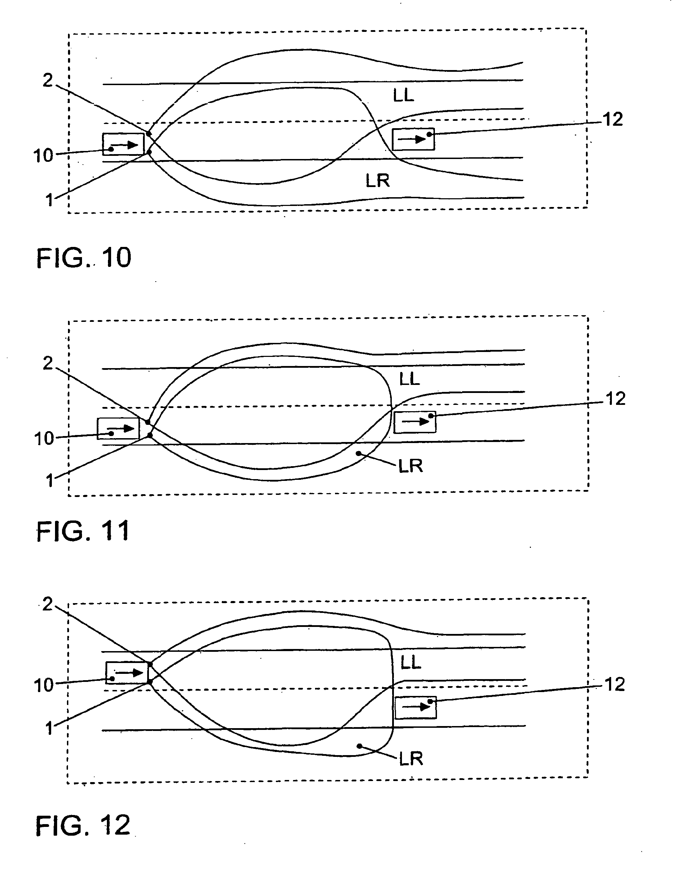

In Fig. 10 ist eine Gesamtlichtverteilung gezeigt, die angesteuert wird, wenn ein vorausfahrendes Fahrzeug 12 detektiert wird. Die Ausleuchtung LR des rechten Scheinwerfers 1 ist im Bereich der Fahrbahn des Fahrzeugs 10 sowie im Bereich der Gegenfahrbahn so begrenzt, dass die Hell-Dunkel-Grenze so weit wie möglich an das vorausfahrende Fahrzeug 12 heranreicht, eine Blendung des Fahrers des vorausfahrenden Fahrzeugs 12 jedoch vermieden wird. Im Bereich rechts neben dem vorausfahrenden Fahrzeug 12 wird von dem rechten Scheinwerfer 1 eine Fernlichtausleuchtung bereitgestellt, ohne hierdurch den Fahrer des vorausfahrenden Fahrzeugs 12 zu blenden. Vom linken Scheinwerfer 2 wird die Ausleuchtung LL bereitgestellt. Auch sie ist im Bereich der Fahrbahn des Fahrzeugs 10 so begrenzt, dass die Hell-Dunkel-Grenze so weit wie möglich an das vorausfahrende Fahrzeug 12 heranreicht, eine Blendung des Fahrers des vorausfahrenden Fahrzeugs 12 jedoch vermieden wird. Im Bereich der Gegenfahrbahn wird von dem linken Scheinwerfer 2 eine Fernlichtausleuchtung bereitgestellt, so dass der Fahrer des Fahrzeugs 10 die Gegenfahrbahn gut überblicken kann.

Die sich aus den Ausleuchtungen LR und LL ergebende Gesamtlichtverteilung wird kontinuierlich an den horizontalen und vertikalen Winkel des Fahrzeugs 10 zum vorausfahrenden Fahrzeug 12 angepasst, so dass die Leuchtweite im Mittelbereich so weit wie möglich an das vorausfahrende Fahrzeug heranreicht.

Die Fig. 11 und 12 zeigen eine weitere mögliche Gesamtlichtverteilung, wie sie insbesondere für einen Überholvorgang angesteuert werden kann und sich bei der Durchführung eines nicht zur Erfindung gehörenden Verfahrens ergibt. Der beabsichtigte Überholvorgang wird entweder vom Fahrer angezeigt. Dieses Signal kann über den Fahrzeugbus 17 an das Steuergerät 16 übertragen werden. Ferner kann der Überholvorgang mittels im Fahrzeug erfasster Daten detektiert werden. Im Vergleich zu der in Fig. 10 gezeigten Gesamtlichtverteilung wird in diesem Fall die Ausleuchtung LR des rechten Scheinwerfers 1 so verändert, dass er nicht mehr rechts an dem vorausfahrenden Fahrzeug 12 vorbei leuchtet, sondern die maximale Leuchtweite auf den Abstand zu dem vorausfahrenden Fahrzeug 12 begrenzt wird und gleichzeitig eine größere Ausleuchtung im Bereich der Gegenfahrbahn bereitgestellt wird. In Fig. 12 ist die Lichtverteilung gezeigt, wie sie sich nach einem Wechsel des Fahrzeugs 10 auf die Gegenfahrbahn ergibt.

Wird mehr als ein Verkehrsteilnehmer in Richtung der Lichtemission detektiert, kann die Lichtverteilung entsprechend den detektierten Verkehrsteilnehmern angepasst werden. Beispielweise kann die Breite des Korridors in der Mitte der Lichtverteilung so erweitert werden, dass sich mehrere Fahrzeuge darin befinden.

Beispielsweise sind die Blenden 8 und 9 für sowohl den rechten Scheinwerfer 1 als auch für den linken Scheinwerfer 2 nicht nur in vertikaler Richtung bewegbar, sondern auch nach rechts und nach links, d.h. in horizontaler Richtung. Auf diese Weise lässt sich auch die horizontale Lage der Stufe 8b bzw. 9b verändern. Die Breite des Mittelbereichs kann so dadurch verändert werden, dass sowohl die vertikale als auch die horizontale Lage der Blenden 8 und 9 verändert wird, ohne dass die Lichtemissionsrichtung L der Scheinwerfer 1 und 2 geschwenkt werden muss. Für die Blenden 8 und 9 der Blendenanordnungen für den rechten und linken Scheinwerfer ist in diesem Fall ein weiterer Aktuator für die horizontale Bewegung der Blenden 8 und 9 vorgesehen.

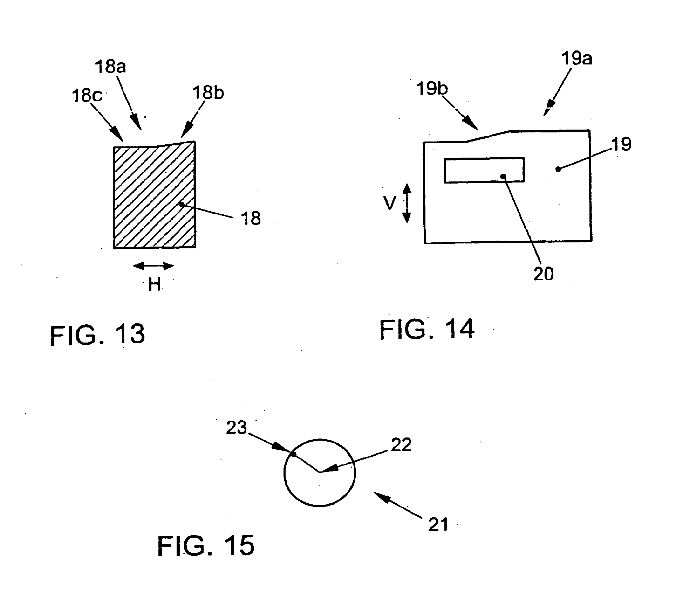

Beispielsweise umfasst eine Blendenanordnung für einen, insbesondere für beide Scheinwerfer der Scheinwerferanordnung zwei Blenden, wobei eine Blende horizontal verschiebbar ist und eine andere Blende vertikal verschiebbar ist. Auf diese Weise lässt sich mit dem Scheinwerfer sowohl eine vertikale als auch eine horizontale Hell-Dunkel-Grenze erzeugen. Mit Bezug zu den Fig. 13 und 14 werden diese beiden Blenden beschrieben.

Die folgenden Ausführungen beziehen sich auf den linken Scheinwerfer. Der rechte Scheinwerfer dieser Scheinwerferanordnung ist entsprechend spiegelsymmetrisch aufgebaut. Lediglich die Kontur der Abschattungskanten der Blenden ist bei den Blenden für den rechten und linken Scheinwerfer identisch.

Die in Fig. 13 gezeigte erste Blende 18 ist - wie die in Fig. 2A gezeigte Blende 8 - ein flächiges Gebilde mit einer Abschattungskante 18a, welche eine Grenzlinie definiert, bei der das von einer Lichtquelle emittierte Licht abgeschattet wird. Die Abschattungskante 18a weist einen schräg verlaufenden Bereich 18b auf, der mit einem Knick in einen horizontal verlaufenden Bereich 18c übergeht. Wie es später erläutert werden wird, ist die erste Blende 18 in der Horizontalen verschiebbar in der Blendenanordnung aufgenommen.

Die in Fig. 14 gezeigte zweite Blende 19 ähnelt der in Fig. 2A gezeigten ersten Blende 8. Auch sie ist ein flächiges Gebilde mit einer Abschattungskante 19a. Wie bei der Blende 8 der Fig. 2A, weist die Abschattungskante 19a zwei vertikale Niveaus auf, die über eine schräge Stufe 19b miteinander verbunden sind.

Das höhere Niveau der Abschattungskante 19a ist bei den zweiten Blenden 19 für den rechten und linken Scheinwerfer auf der rechten Seite der schrägen Stufe 19b.

Wie vorstehend erläutert, ist die Kontur der Abschattungskanten 18a und 18b der Blenden 18 und 19 für den rechten und linken Scheinwerfer identisch, d. h. die Schrägen 18b und 19b verlaufen bei beiden Scheinwerfern in dieselbe Richtung.

Für die beiden Blenden 18 und 19 ist ein gemeinsamer Aktuator 21 vorgesehen, der schematisch in Fig. 15 gezeigt ist. Der Aktuator 21 umfasst einen Schrittmotor, dessen Welle sich um eine Drehachse 22 dreht. Mit dieser Drehachse 22 ist über ein radiales Verbindungselement ein Stift 23 gekoppelt, der sich beim Betrieb des Schrittmotors auf einer Kreisbahn bewegt. Dabei ist der Stift senkrecht zu der in Fig. 15 gezeigten Zeichenebene ausgerichtet.

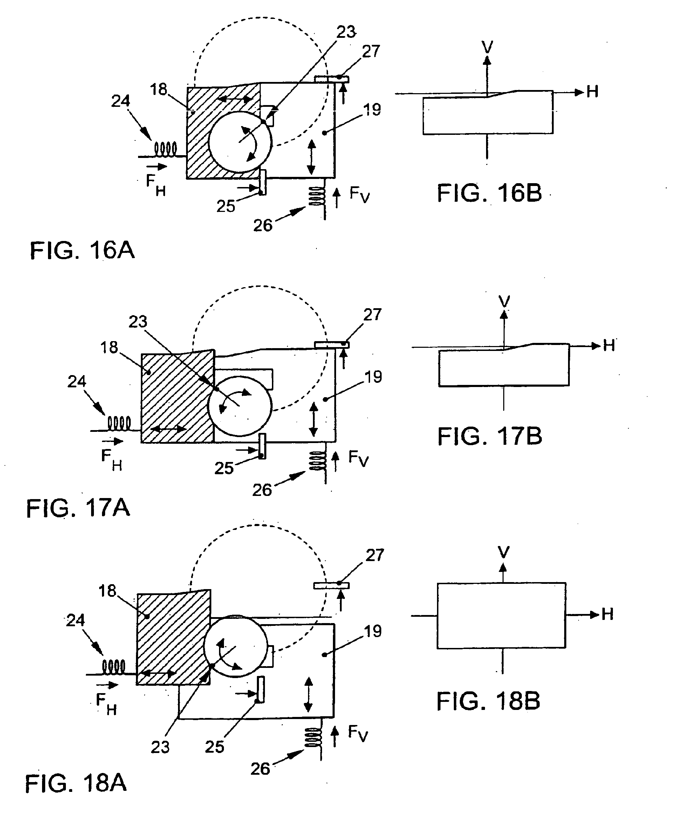

Mit Bezug zu den Fig. 16A bis 19B wird die Kopplung der beiden Blenden 18 und 19 mit dem Aktuator 21 erläutert. Ferner werden die verschiedenen Positionen der Blenden 18 und 19 erläutert, mit denen verschiedene Lichtverteilungen erzeugt werden können.

Die Blenden 18 und 19 sind so angeordnet, dass sie sich z. T. überlappen können. Dabei ist die äußere Blende 18 in horizontaler Richtung verschiebbar und die innere Blende 19 in vertikaler Richtung verschiebbar. Die horizontal verschiebbare Blende 18 ist mit einer Feder 24 verbunden, welche eine Kraft F_{H} auf die Blende 18 ausübt, welche die Blende 18 gemäß der Darstellung der Fig. 16A bis 19A nach rechts, d. h. nach innen, drückt. Auf der anderen Seite ist ein Anschlag 25 vorgesehen, welcher die äußerste rechte Stellung der Blende 18 definiert. Der Anschlag 25 begrenzt somit die Verschiebbarkeit der Blende 18 in horizontaler Richtung.

Gleichermaßen ist die vertikal verschiebbare Blende 19 mit einer Feder 26 verbunden, welche auf die Blende 19 eine Kraft F_{V} nach oben ausübt und somit die Blende 19 nach oben drückt. Auf der anderen Seite ist auch für die Blende 19 ein Anschlag 27 vorgesehen, welcher die oberste Stellung der Blende 19 definiert. D. h. der Anschlag 27 begrenzt die Verschiebbarkeit der Blende 19 in vertikaler Richtung.

In der Blendenanordnung sind die beiden Blenden 18 und 19 so montiert, dass der Stift 23 des Aktuators 21 mit jeweils einer Kante der Blenden 18 und 19 wechselwirkt. In dem in Fig. 16A bis 19A gezeigten Beispiel berührt der Stift 23 die rechte Seitenkante der Blende 18. Sofern sich somit der Stift 23 links des Anschlags 25 befindet, bestimmt der Stift 23 die Position der Blende 18 in horizontaler Richtung. Durch eine Bewegung des Stiftes 23 ist insbesondere die Blende 18 im Wesentlichen stufenlos in horizontaler Richtung verschiebbar. In diesem Fall drückt die Feder 24 die Blende 18 gegen den Stift 23.

Für die Wechselwirkung des Aktuators 21 mit der vertikal verschiebbaren Blende 19 weist die Blende 19 eine Aussparung 20 auf, bei welcher eine nach oben gerichtete Kante gebildet ist. Der Stift 23 des Aktuators 21 befindet sich in dieser Aussparung 20, so dass die nach oben gerichtete Kante der Aussparung 20 von der Feder 26 gegen den Stift 23 gedrückt wird, sofern sich der Stift 23 unterhalb des Anschlags 27 befindet. Die Aussparung 20 ist in der Blende 19 gebildet, damit der Stift 23 nicht bei der Abschattungskante 19A angeordnet werden muss. Dort würde er die Lichtemission des Scheinwerfers beeinträchtigen. Durch die Bewegung des Stiftes 23 in vertikaler Richtung lässt sich die Blende 19 im Wesentlichen stufenlos in vertikaler Richtung verschieben.

Durch den Aktuator 21 lassen sich somit die Blenden 18 und 19 in horizontaler bzw. vertikaler Richtung verschieben. Auf diese Weise kann mit der Blendenanordnung sowohl eine vertikale als auch eine horizontale Hell-Dunkel-Grenze erzeugt werden, wobei sich die vertikale Hell-Dunkel-Grenze im Wesentlichen stufenlos nach rechts und links verschieben lässt und die horizontale Hell-Dunkel-Grenze im Wesentlichen stufenlos nach oben und unten verschieben lässt. Auf diese Weise lassen sich die vorstehend mit Bezug zu den Fig. 3B, 4B, 5B, 6A und 6B sowie zu den Fig. 8 bis 12 beschriebenen Lichtverteilungen erzeugen. Im Folgenden werden beispielhaft drei Lichtverteilungen beschrieben.

In der in Fig. 16A gezeigten Position befindet sich die Blende 18 in der äußersten rechten Stellung, d. h. sie schlägt gegen den Anschlag 25 an. Die Blende 19 befindet sich in der obersten Stellung, d. h. sie schlägt gegen den Anschlag 27 an. Der Stift 23 des Aktuators 21 befindet sich in einer Stellung, welche diese Grenzpositionen der beiden Blenden 18 und 19 erlaubt. Die beiden Blenden 18 und 19 sind in diesem Fall so angeordnet, dass die Abschattungskanten 18a und 19a ineinander übergehen, wobei die schrägen Stufen 18b und 19b in Lichtemissionsrichtung überlappen, so dass die Abschattungskante 18a der Blende 18 nach rechts von der Abschattungskante 19a der Blende 19 fortgesetzt wird. Die Blende 18 befindet sich somit vor oder der Blende 19. Bei dieser Position der Blenden 18 und 19 wird eine Abblendlichtverteilung erzeugt, wie sie in Fig. 16B gezeigt ist.

Wird nun der Schrittmotor des Aktuators 21 entgegen dem Uhrzeigersinn gedreht, wird die in der Fig. 17A gezeigte Position der Blenden 18 und 19 angefahren. Bei der Drehbewegung des Stiftes 23 verlagert sich der Stift 23 zunächst in vertikaler Richtung nach oben. Da die Blende 19 jedoch bereits gegen den Anschlag 27 anschlägt, verschiebt sich die Blende 19 nicht. In horizontaler Richtung verlagert sich der Stift 23 jedoch nach links und verschiebt dabei die Blende 18 nach links. Die Blende 18 wird somit nach links aus dem Lichtstrahl einer Lichtquelle herausgefahren. Es verbleibt jedoch die Abschattungskante 19a der Blende 19, so dass im Ergebnis weiterhin die in Fig. 17B gezeigte Lichtverteilung eines Abblendlichts erzeugt wird. Dreht sich der Schrittmotor des Aktuators 21 weiter entgegen dem Uhrzeigersinn, wird die in Fig. 18A gezeigte Position der Blenden 18 und 19 angefahren. Bei der Drehung des Stiftes 23 drückt dieser gegen die nach oben gerichtete Kante der Öffnung 20 und verschiebt die Blende 19 nach unten. Dabei wird die horizontale Hell-Dunkel-Grenze der erzeugten Lichtverteilung kontinuierlich bis zu einer Femlichtverteilung angehoben, wie sie in Fig. 18B gezeigt ist. Die Blende 18 befindet sich in diesem Fall weiterhin außerhalb des Lichtstrahls der Lichtquelle, so dass sie die erzeugte Lichtverteilung nicht beeinflusst.

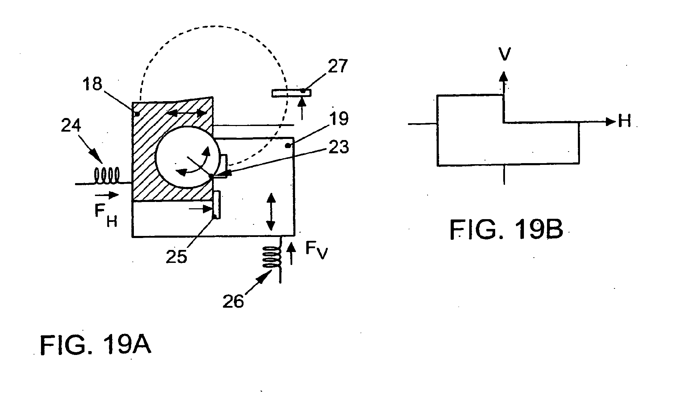

Wird andererseits der Motor des Aktuators 21 von der in Fig. 16A gezeigten Position im Uhrzeigersinn in Richtung der in Fig. 19A gezeigten Positon bewegt, verändert sich die Lage der Blende 18 nicht, da der Stift 23 in horizontaler Richtung über den Anschlag 25 hinaus bewegt wird. Die Blende 19 wird jedoch von dem Stift 23 nach unten verschoben, so dass die horizontale Hell-Dunkel-Grenze in der linken Hälfte der sich ergebenden Lichtverteilung kontinuierlich angehoben wird. Die rechte Hälfte der Lichtverteilung wird aufgrund der Position der Blende 18 nicht verändert. In dieser Hälfte bleibt somit die Ausleuchtung, wie sie sich beim Abblendlicht ergibt, erhalten. Insgesamt ergibt sich somit eine Lichtverteilung mit verschiedenen Leuchtweiten, die über eine vertikale Hell-Dunkel-Grenze miteinander verbunden sind, wie sie im Wesentlichen der in Fig. 4B gezeigten Lichtverteilung für den anderen Scheinwerfer entspricht.

Wird der Schrittmotor des Aktuators 21 von der in Fig. 19A gezeigten Position in die in der Fig. 18A gezeigten Position in Richtung des Uhrzeigersinns gedreht, wird die Blende 18 nach außen verschoben und damit die vertikale Hell-Dunkel-Grenze im Wesentlichen stufenlos nach rechts verschoben, bis sich eine Lichtverteilung für ein vollständiges Fernlicht ergibt, wie es in Fig. 18B gezeigt ist.

Falls für die Blendenanordnung nur ein sehr geringer Bauraum zur Verfügung steht, kann die Blende 18 auch in zwei oder mehr Lamellen aufgeteilt werden, die in den in den Fig. 17A und 18A gezeigten Positionen übereinander liegen, so dass außen kein weiterer Bauraum benötigt wird.

Sollte ferner der Radius der Kreisbahn, die der Stift 23 beschreibt, nicht für die Bewegung der Blenden 18 und 19 ausreichen, können Hebel eingesetzt werden, welche die Bewegung des Stiftes 23 in größere Bewegungen der Blenden 18 und 19 umsetzen. Ferner können die Kanten der Blenden 18 und 19, an denen der Stift 23 die Blenden 18 und 19 berührt und diese verschiebt, auch anders ausgeformt sein, als in den Fig. 13 bis 19B dargestellt.

Schließlich kann an einer Blende 18 und/oder 19 ein Kalibriermuster, wie z. B. ein kleines Fadenkreuz befestigt sein, das sich nur bei einer bestimmten Position der Blende 18 bzw. 19 im Lichtstrahl befindet und somit auf die Straße projiziert wird.

## Patentansprüche

1. Verfahren zum Steuern einer Scheinwerferanordnung für ein Fahrzeug (10) mit zumindest zwei beabstandeten Scheinwerfern (1, 2), die jeweils einen Lichtstrahl (L) zum Erzeugen einer Gesamtlichtverteilung emittieren, und mit jeweils einer Blendenanordnung (8, 9) für jeden der zwei Scheinwerfer (1, 2) deren Lage zum Verändern der Gesamtlichtverteilung veränderbar ist, bei dem
- ein Verkehrsteilnehmer (11, 12) in Richtung der Lichtemission (L) der Scheinwerferanordnung erfasst wird und,
- wenn ein solcher Verkehrsteilnehmer (11, 12) erfasst wurde, die Lage zumindest einer Blendenanordnung verändert wird, so dass bei der Gesamtlichtverteilung der Scheinwerferanordnung in Richtung des erfassten Verkehrsteilnehmers (11, 12) ein Mittelbereich mit geringerer Leuchtweite und beidseitig neben diesem Mittelbereich Seitenbereiche mit größerer Leuchtweite gebildet werden,
**dadurch gekennzeichnet, dass**,
- wenn ein solcher Verkehrsteilnehmer (11, 12) erfasst wurde, ferner die Emissionsrichtung (L) des Lichtstrahls zumindest eines Scheinwerfers (1, 2) um eine vertikale Achse geschwenkt wird, um die Gesamtlichtverteilung der Scheinwerferanordnung zu erzeugen, bei der in Richtung des erfassten Verkehrsteilnehmers (11, 12) ein Mittelbereich mit geringerer Leuchtweite und beidseitig neben diesem Mittelbereich Seitenbereiche mit größerer Leuchtweite gebildet werden, und
- der vertikale Winkel des Verkehrsteilnehmers (11, 12) in Richtung der Lichtemission (L) der Scheinwerferanordnung erfasst wird und dass die Leuchtweite im Mittelbereich in Richtung des erfassten Verkehrsteilnehmers (11, 12) in Abhängigkeit von dem vertikalen Winkel des Verkehrsteilnehmers (11, 12) geregelt wird.

2. Verfahren nach Anspruch 1, **dadurch gekennzeichnet, dass** die Gesamtlichtverteilung der Scheinwerferanordnung in Richtung des erfassten Verkehrsteilnehmers (11, 12) dadurch verändert wird, dass die Lage zumindest einer Blendenanordnung in vertikaler Richtung verändert wird und die Emissionsrichtung (L) des Lichtstrahls zumindest eines Scheinwerfers (1, 2) um eine vertikale Achse geschwenkt wird.

3. Verfahren nach Anspruch 2, **dadurch gekennzeichnet, dass** die Emissionsrichtungen (L) der Lichtstrahlen der Scheinwerfer (1, 2) um eine vertikale Achse auseinandergeschwenkt werden, wenn ein Verkehrsteilnehmer (11, 12) in Richtung der Lichtemission (L) der Scheinwerferanordnung erfasst wird.

4. Verfahren nach Anspruch 1, **dadurch gekennzeichnet, dass** die Gesamtlichtverteilung der Scheinwerferanordnung in Richtung des erfassten Verkehrsteilnehmers (11, 12) dadurch verändert wird, dass die Lage zumindest einer Blendenanordnung in vertikaler und horizontaler Richtung verändert wird.

5. Verfahren nach einem der vorstehenden Ansprüche, **dadurch gekennzeichnet, dass** jede der beiden Blendenanordnungen zumindest zwei vertikal und/oder horizontal bewegbare flächige Blenden (8, 9; 18, 19) umfasst und dass die Gesamtlichtverteilung der Scheinwerferanordnung beim Erfassen eines anderen Verkehrsteilnehmers (11, 12) dadurch verändert wird, dass die vertikale Lage und/oder die horizontale Lage zumindest einer der beiden Blenden (8, 9; 18, 19) einer Blendenanordnung verändert wird.

6. Verfahren nach Anspruch 5, **dadurch gekennzeichnet, dass** die Blenden (8, 9) eine Abschattungskante (8a, 9a) aufweisen, bei welcher der Lichtstrahl des jeweiligen Scheinwerfers (1, 2) abgeschattet wird, dass Abschattungskanten (9a) der zweiten Blenden (9) eine senkrechte Stufe (9b) aufweisen und dass die Leuchtweite im Mittelbereich der Gesamtlichtverteilung der Scheinwerferanordnung durch die vertikale Lage der zweiten Blenden (9) oder einer der zweiten Blenden (9) gesteuert und/oder geregelt wird.

7. Verfahren nach einem der vorstehenden Ansprüche, **dadurch gekennzeichnet, dass** die Gesamtlichtverteilung symmetrisch hinsichtlich der Mittelachse der Gesamtlichtverteilung ist.

## Claims

1. Method for controlling a headlight arrangement for a vehicle (10), having at least two spaced-apart headlights (1, 2) which respectively emit a light beam (L) for generating an overall light distribution, and respectively having a diaphragm arrangement (8, 9) for each of the two headlights (1, 2), the positions of which can be varied in order to vary the overall light distribution, in which
- a road user (11, 12) is detected in the direction of the light emission (L) of the headlight arrangement, and
- when such a road user (11, 12) has been detected the position of at least one diaphragm arrangement is varied such that in respect of the overall light distribution of the headlight arrangement in the direction of the detected road user (11, 12) a central region with a relatively small lighting range is formed and lateral regions with a larger lighting range are formed on both sides next to said central region,
**characterized in that**
- when such a road user (11, 12) has been detected, the emission direction (L) of the light beam of at least one headlight (1, 2) is, furthermore, pivoted about a vertical axis in order to generate the overall light distribution of the headlight arrangement, in respect of which overall light distribution in the direction of the detected road user (11, 12) a central region with a relatively small lighting range is formed and lateral regions with a larger lighting range are formed on both sides next to said middle region, and
- the vertical angle of the road user (11, 12) in the direction of the light emission (L) of the headlight arrangement is detected, and **in that** the lighting range in the central region in the direction of the detected road user (11, 12) is regulated as a function of the vertical angle of the road user (11, 12).

2. Method according to Claim 1, **characterized in that** the overall light distribution of the headlight arrangement in the direction of the detected road user (11, 12) is varied such that the position of at least one diaphragm arrangement is varied in a vertical direction, and the emission direction (L) of the light beam of at least one headlight (1, 2) is pivoted about a vertical axis.

3. Method according to Claim 2, **characterized in that** the emission directions (L) of the light beams of the headlights (1, 2) are pivoted apart about a vertical axis when a road user (11, 12) is detected in the direction of the light emission (L) of the headlight arrangement.

4. Method according to Claim 1, **characterized in that** the overall light distribution of the headlight arrangement in the direction of the detected road user (11, 12) is varied such that the position of at least one diaphragm arrangement is varied in vertical and horizontal directions.

5. Method according to one of the preceding claims, **characterized in that** each of the two diaphragm arrangements comprises at least two vertically and/or horizontally movable two-dimensional diaphragms (8, 9; 18, 19), and **in that** upon detection of another road user (11, 12) the overall light distribution of the headlight arrangement is varied such that the vertical position and/or the horizontal position of at least one of the two diaphragms (8, 9; 18, 19) of a diaphragm arrangement is varied.

6. Method according to Claim 5, **characterized in that** the diaphragms (8, 9) have a shading edge (8a, 9a) in the case of which the light beam of the respective headlight (1, 2) is shaded, **in that** shading edges (9a) of the second diaphragms (9) have a vertical step (9b), and **in that** the lighting range in the central region of the overall light distribution of the headlight arrangement is controlled and/or regulated by the vertical position of the second diaphragms (9) or one of the second diaphragms (9).

7. Method according to one of the preceding claims, **characterized in that** the overall light distribution is symmetrical with regard to the central axis of the overall light distribution.

## Revendications

1. Procédé de commande d'un ensemble de phare pour un véhicule (10) comprenant au moins deux phares espacés (1, 2) qui émettent chacun un faisceau de lumière (L) pour produire une distribution de lumière totale, et comprenant un ensemble de diaphragme respectif (8, 9) pour chacun des deux phares (1, 2), dont la position peut être modifiée pour modifier la distribution de lumière totale, dans lequel
- un usager de la circulation (11, 12) est détecté dans la direction de l'émission de lumière (L) de l'ensemble de phare, et
- si un tel usager de la circulation (11, 12) a été détecté, la position d'au moins un ensemble de diaphragme est modifiée de telle sorte que dans le cas de la distribution de lumière totale de l'ensemble de phare dans la direction de l'usager de la circulation détecté (11, 12), une région centrale de plus faible portée d'éclairage, et de part et d'autre de cette région centrale, des régions latérales de plus grande portée d'éclairage soient formées,
**caractérisé en ce que**
- si un tel usager de la circulation (11, 12) a été détecté, la direction d'émission (L) du faisceau de lumière d'au moins un phare (1, 2) est en outre pivotée autour d'un axe vertical afin de générer la distribution de lumière totale de l'ensemble de phare, dans laquelle, dans la direction de l'usager de la circulation détecté (11, 12), une région centrale de plus faible portée d'éclairage et de part et d'autre de cette région centrale, des régions latérales de plus grande portée d'éclairage, sont formées, et
- l'angle vertical de l'usager de la circulation (11, 12) dans la direction de l'émission de lumière (L) de l'ensemble de phare est détecté et **en ce que** la portée d'éclairage dans la région centrale dans la direction de l'usager de la circulation (11, 12) est régulée en fonction de l'angle vertical de l'usager de la circulation (11, 12).

2. Procédé selon la revendication 1, **caractérisé en ce que** la distribution de la lumière totale de l'ensemble de phare dans la direction de l'usager de la circulation (11, 12) est modifiée par le fait que la position d'au moins un ensemble de diaphragme est modifiée dans la direction verticale et la direction d'émission (L) du faisceau de lumière d'au moins un phare (1, 2) est pivotée autour d'un axe vertical.

3. Procédé selon la revendication 2, **caractérisé en ce que** les directions d'émission (L) des faisceaux de lumière des phares (1, 2) sont pivotées à l'écart l'une de l'autre autour d'un axe vertical si un usager de la circulation (11, 12) est détecté dans la direction de l'émission de lumière (L) de l'ensemble de phare.

4. Procédé selon la revendication 1, **caractérisé en ce que** la distribution de lumière totale de l'ensemble de phare dans la direction de l'usager de la circulation détecté (11, 12) est modifiée par le fait que la position d'au moins un ensemble de diaphragme est modifiée dans la direction verticale et horizontale.

5. Procédé selon l'une quelconque des revendications précédentes, **caractérisé en ce que** chacun des deux ensembles de diaphragme comprend au moins deux diaphragmes plans (8, 9 ; 18, 19) déplaçables verticalement et/ou horizontalement, et **en ce que** la distribution de la lumière totale de l'ensemble de phare est modifiée lors de la détection d'un autre usager de la circulation (11, 12) par le fait que la position verticale et/ou la position horizontale d'au moins l'un des deux diaphragmes (8, 9 ; 18, 19) d'un ensemble de diaphragme est modifiée.

6. Procédé selon la revendication 5, **caractérisé en ce que** les diaphragmes (8, 9) présentent une arête d'obscurcissement (8a, 9a) avec laquelle le faisceau de lumière du phare respectif (1, 2) est obscurci, **en ce que** des arêtes d'obscurcissement (9a) des deuxièmes diaphragmes (9) présentent un étage vertical (9b) et **en ce que** la portée d'éclairage dans la région centrale de la distribution de la lumière totale de l'ensemble de phare est commandée et/ou régulée par la position verticale des deuxièmes diaphragmes (9) ou de l'un des deuxièmes diaphragmes (9).

7. Procédé selon l'une quelconque des revendications précédentes, **caractérisé en ce que** la distribution de la lumière totale est symétrique par rapport à l'axe médian de la distribution de la lumière totale.
